# EUROPÄISCHE PATENTSCHRIFT

(11) **EP 1 095 415 B1**
(45) Veröffentlichungstag und Bekanntmachung des Hinweises auf die Patenterteilung: **05.03.2003**
(21) Anmeldenummer: 99942713.1
(22) Anmeldetag: 30.06.1999
(51) Int. Cl.: H01M 4/00

(54) **GASDICHTER VERBUND AUS BIPOLARPLATTE UND MEMBRAN-ELEKTRODEN-EINHEIT VON POLYMERELEKTROLYTMEMBRAN-BRENNSTOFFZELLEN**
GAS-PROOF ASSEMBLY COMPOSED OF A BIPOLAR PLATE AND A MEMBRANE-ELECTRODE UNIT OF POLYMER ELECTROLYTE MEMBRANE FUEL CELLS
ENSEMBLE ETANCHE AUX GAZ FORME D'UNE PLAQUE BIPOLAIRE ET D'UNE UNITE MEMBRANE-ELECTRODES DE PILES A COMBUSTIBLE A MEMBRANE D'ELECTROLYTE POLYMERE

(30) Priorität: 30.06.1998 DE 19829142
(43) Veröffentlichungstag der Anmeldung: 02.05.2001
(73) Patentinhaber: Manhattan Scientifics, Inc., New York, NY 10022 (US)
(72) Erfinder: KOSCHANY, Petra, D-94121 Salzweg (DE)
(74) Vertreter: Riederer Freiherr von Paar zu Schönau, Anton
(86) Internationale Anmeldenummer: DE9901890
(87) Internationale Veröffentlichungsnummer: WO00002279

(56) Entgegenhaltungen:
- EP-A- 0 331 128
- EP-A- 0 918 362
- WO-A-94/25995
- WO-A-98/33225
- DE-A- 19 823 880
- GB-A- 2 323 700
- US-A- 5 187 025
- PATENT ABSTRACTS OF JAPAN vol. 1998, no. 03, 27. Februar 1998 (1998-02-27) -& JP 09 289029 A (TANAKA KIKINZOKU KOGYO KK), 4. November 1997 (1997-11-04) -& DATABASE WPI Derwent Publications Ltd., London, GB; AN 1998-030061 XP002128385 -& CHEMICAL ABSTRACTS, vol. 128, no. 5, 2. Februar 1998 (1998-02-02) Columbus, Ohio, US; abstract no. 50707, YANAGIHARA: "Structure of sealings and cooling means for solid polymer electrolyte fuel cells and fuel cell stacks" XP002128384
- PATENT ABSTRACTS OF JAPAN vol. 1995, no. 06, 31. Juli 1995 (1995-07-31) -& JP 07 065847 A (KANSAI ELECTRIC POWER CO INC:THE;OTHERS: 01), 10. März 1995 (1995-03-10)
- PATENT ABSTRACTS OF JAPAN vol. 008, no. 135 (E-252), 22. Juni 1984 (1984-06-22) -& JP 59 046767 A (TOKYO SHIBAURA DENKI KK), 16. März 1984 (1984-03-16)
- PATENT ABSTRACTS OF JAPAN vol. 1997, no. 08, 29. August 1997 (1997-08-29) -& JP 09 097619 A (MATSUSHITA ELECTRIC IND CO LTD), 8. April 1997 (1997-04-08)

## Beschreibung

Die Erfindung betrifft einen gasdichten Verbund aus Bipotarplatte und Membran-Elektroden-Einheit von Polymerelektrolytmembran(PEM)-Brennstoffzellen, ein Verfahren zu seiner Herstellung und die Anwendung des Verbunds in einem reihengeschalteten Brennstoffzellenstack.

Eine PEM-Brennstoffzelle besteht aus zwei Stromableiterplatten, zwei porösen, eventuell katalysierten Gasdiffusionsschichten und einer katalysierten oder nicht katalysierten lonenaustauschermembran, die zwischen diesen Schichten angeordnet ist. Die Fachsprache hinsichtlich der Verbundskomponenten ist bisher noch nicht einheitlich, es werden gelegentlich die Gasdiffusionsschichten und gelegentlich auf der Membran aufgebrachte Katalysatorschichten auch als Elektroden bezeichnet. An den Stromableiterplatten befinden sich typischerweise Einrichtungen zur Zuführung und Verteilung der Reaktanden, sogenannte Gasverteilungsstrukturen. Da die elektrische Spannung einer einzelnen Zelle für praktische Anwendungen viel zu niedrig ist, müssen eine Mehrzahl solcher Zellen in Reihe geschaltet werden. Bei dem sich daraus ergebenden Brennstoffzellenstapel bzw. -stack werden die aufeinandertreffenden Stromableiterplatten als Bipolarplatten bezeichnet. Eine Bipolarplatte steht mit einer ihrer Oberflächen in elektrischem Kontakt mit der Anode einer Zelle des Stapels, während die gegenüberliegende Oberfläche mit der Kathode der benachbarten Zelle kontaktiert ist. Die Funktion der Bipolarplatten liegt zum einen im Durchleiten des Stroms durch den Stack, zum anderen im Trennen der Reaktionsgase. Auch weisen sie meistens Gasverteilungsstrukturen z. B. ein Kanalsystem zur besseren Verteilung der Reaktionsgase im Anoden- und Kathodenraum auf.

Durch Zuführung des typischen Reaktionsgases Wasserstoff an die Anodenseite der Brennstoffzelle werden in der Katalysatorschicht, die anodenseitig mit der Ionenaustauschermembran direkt in Berührung steht, Kationen gebildet und gleichzeitig Elektronen an die Elektronen leitenden anodenseitigen Schichten abgegeben. Als Oxidationsmittel wird typischerweise Sauerstoff (oder Luft) der Kathodenseite der Zelle zugeführt. Durch Aufnahme der durch die Ionenaustauschermembran diffundierten Wasserstoffionen und der durch einen äußeren Stromkreis von der Anode zur Kathode geführten Elektronen wird das Reaktionsgas Sauerstoff reduziert. Diese Reaktion läuft ebenfalls in einer Katalysatorschicht ab, die die Membran kathodenseitig kontaktiert. In den bevorzugten Anwendungsfällen ist die Konzentration des Sauerstoffs in der Luft ausreichend. Als Reaktionsprodukt entsteht Wasser. Die Reaktionsenthalpie wird in Form von elektrischer Energie und Abwärme frei. Die Membran und die Gasdiffusionsschichten oder Elektroden, einschließlich der jeweiligen Katalysatorschichten, werden zusammen als Membran-Elektroden-Baugruppe (im folgenden MEA - Membrane Electrode Assembly) bezeichnet. Ob zu den "Elektroden" Anteile der Gasdiffusionsschicht hinzuzurechnen sind oder ob nur der Katalysator die Elektroden bildet, ist, wie gesagt, in der Literatur nicht einheitlich geregelt. Im folgenden wird bei einer für das Verständnis notwendigen Unterscheidung gesondert darauf hingewiesen.

Ein wesentliches Problem bei der Konstruktion von Brennstoffzellenstacks ist die dauerhafte Abdichtung des Anodenraums. Aufgrund der hohen Reaktionsfreudigkeit von Wasserstoff ist dies neben guter Energieausnutzung auch aus Sicherheitsgründen notwendig. Wird Luft oder Sauerstoff mit wesentlichem Überdruck verwendet, so muß auch der Kathodenraum abgedichtet werden.

Viele Dichtungssystemen benötigen am Dichtrand erheblichen Anpreßdruck, um die notwendige Dichtwirkung zu erreichen. Dies hat zur Folge, daß die Spannplatten größer dimensioniert werden müssen und somit den gesamten Stack schwerer machen, was nachteilig für die mobile Anwendung ist. Bei Verwendung von Klemmelementen am Rahmen entsteht zusätzliches Gewicht durch relativ dickwandige Metallteile. Die Abstimmung zwischen der Dicke der Elektroden und der Bipolarplatten und der Dicke der Dichtung ist äußerst schwierig, da beide, Elektroden und Dichtung, geeigneten Anpreßdruck benötigen, aber unterschiedliche Elastizitäten aufweisen. Die tolerierbaren Dickenabweichungen sind sehr klein. Diese Anforderung führt zu aufwendigen Herstellungsverfahren, die sehr kostenintensiv sind. Aufgrund der unterschiedlichen, verwendeten Materialien bei Bipolarplatten und Dichtung besteht auch die Gefahr, daß es bei Inbetriebnahme zu Undichtigkeiten kommt, da sich bei Erwärmung die verschiedenen Materialien unterschiedlich ausdehnen. Bei Verwendung von Elastomerdichtungen werden häufig dünne Membranen durch die Längenänderung des Elastomers (z. B. Silikon) beim Zusammenspannen zerrissen.

Ein Verfahren, die Gasräume von PEM-Brennstoffzellen abzudichten, besteht in der Fertigung von Dichtungen aus Elastomermaterialien und dem Anordnen dieser Dichtungen zwischen der Polymerelektrolytmembran und den Bipolarplatten, die aus gasdichtem Graphitmaterialien hergestellt sind. Dabei wird die Dichtung in, auf komplizierte Art und Weise hergestellte, Schlitze eingelegt, die eigens dafür in einem Kohlefaserpapier, das als Gasdiffusionsschicht dient, vorgesehen sind. Eine solche Anwendung findet sich beispielsweise in der US-PS 5,284,718.

Die Dichtung kann auch aus einer in der Bipolarplatte integrierten Erhebung, die durch einen Prägevorgang hergestellt ist, gebildet werden. Die Bipolarplatten müssen dann aber aus einem elastischem, plastisch verformbaren und gasdichten Material, z. B. aus Graphitfolien hergestellt sein. Auch hier benötigt die Dichtung erheblichen Druck für die Ausbildung der Dichtwirkung, der von den Spannplatten ausgeübt werden muß. Ein derartiges Verfahren zeigt z. B. DE-OS 195 42 475 A1.

Ein weiteres Abdichtungsverfahren stellt DE-PS 44 42 285 C1 vor, bei dem die negative Polplatte, die Membran, die positive Polplatte und zwei Dichtungen am Rand durch ein Rahmenelement gasdicht und elektrisch isolierend miteinander verklemmt werden. Das aus Metall bestehende Rahmenelement kann Teil einer Polplatte sein und besitzt einen U-Profil-Querschnitt. Durch Aufweitung dieses U-Profils bei der Montage entsteht der Anpreßdruck.

Auch ist es möglich, wie EP-PS 0 690 519 A1 zeigt, eine Einheit aus einer Flächendichtung und der Ionenaustauschermembran herzustellen. Die aus porösem Polytetraflourethylen bestehende Dichtung ist auf beiden Seiten der Membran angebracht und umgibt den mit Katalysator beschichteten Teil der Membran als eine Art Rahmen.

Aus der JP 09-289029 sind geklebte Zellen und schließlich auch geklebte Stapel bekannt, die einzeln hergestellt, gestapelt und wiederum zu einem Stapel zusammengeklebt sind. Die Figuren dieser Druckschrift zeigen die Verklebung mit einem in Fig. 4 in der Draufsicht dargestellten Viereckrahmen 18, also einem vorgeformten Klebeeinsatz. Einen vergleichbare Aufbau zeigt auch die WO 94/25995. Dort ist ein Rahmenelement vorhanden, das unter Verwendung eines Silikon-Dichtungsmittels eingeklebt ist.

Durch die Erfindung soll die Bildung eines Spalts zwischen Dichtung und Gasdiffusionsschicht sicher verhindert werden. Dies erfolgt dadurch, daß der außen um die Gasdiffusionsschicht umlaufende Volumenbereich bis zu seinen Begrenzungsflächen spaltfrei und gasdicht mit einem dort verfestigten Klebemittel ausgefüllt ist. Gemäß einer bevorzugten Ausführung dringt das Klebemittel sogar noch ein kleines Stück in die Diffusionsschicht ein, und gemäß einer weiteren sehr wichtigen besonderen Ausführung sind solche spaltfreien Klebedichtungen nicht nur am Außenumfang der Gasdiffusionsschicht zwischen der Bipolarplatte und der Membran, sondern auch zwischen diesen Bauteilen am Ort von Gasdurchführungen ausgebildet.

Weitere bevorzugte Weiterbildungen der Erfindung finden sich in den jeweiligen Unteransprüchen.

Die Erfindung wird im folgenden unter Bezugnahme auf die Zeichnung anhand der Darstellung eines Ausführungsbeispiels und von Zwischenstufen seines Herstellungsverfahrens näher erläutert. Es zeigen:
- Fig. 1: in Draufsicht eine Bipolarplatte mit darauf angeordneter, durchsichtig dargestellten Gasdiffusionsschicht;
- Fig. 2: einen Querschnitt durch die Anodenseite eines erfindungsgemäßen Verbunds in dessen Randbereich in einer Zwischenstufe des Herstellungsverfahrens;
- Fig. 3: einen Querschnitt entsprechend Fig. 2 in einem Gasdurchführungsbereich des Verbunds;
- Fig. 4: einen Querschnitt durch den hinsichtlich seiner Schichtung gesamten Verbund eines Zellenstacks in dessen Randbereich, wobei in der oberen Hälfte eine Zwischenstufe des Herstellungsverfahrens und in der unteren Hälfte der Endzustand dargestellt sind;
- Fig. 5: einen Querschnitt entsprechend Fig. 4 in einem Gasdurchführungsbereich des Verbunds.

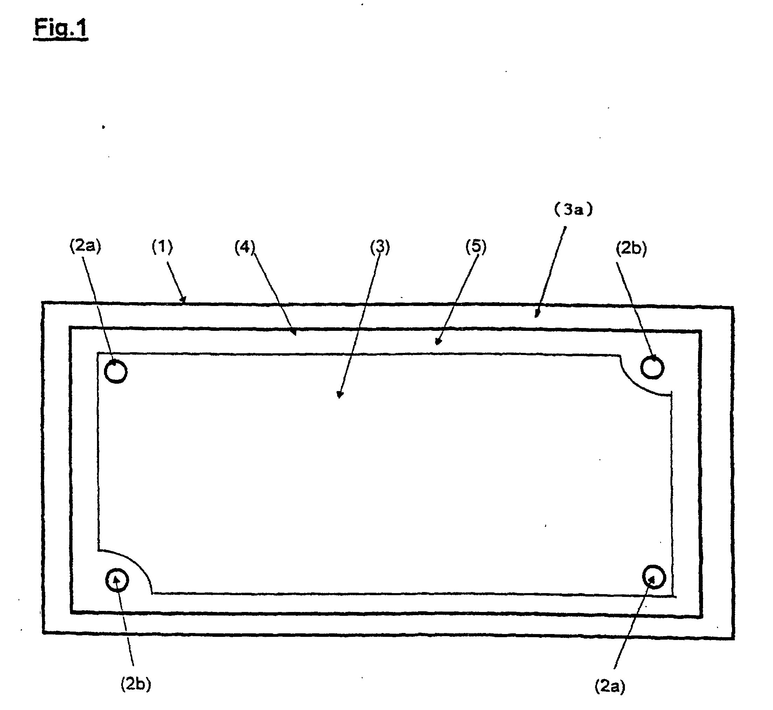

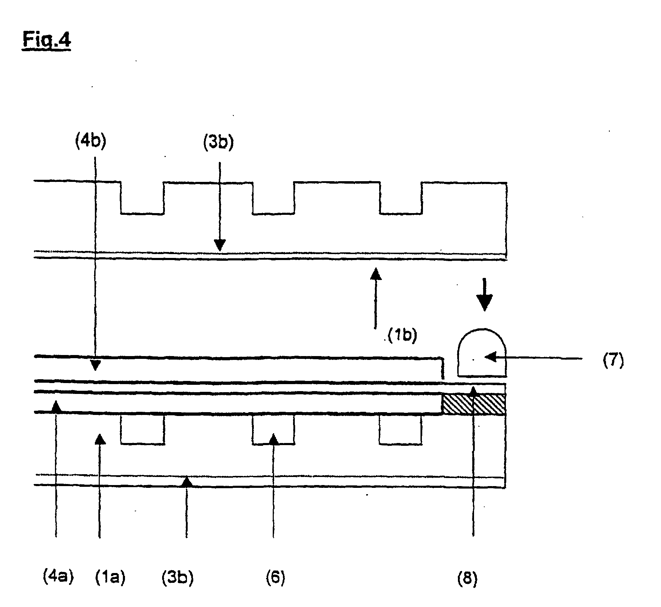

Fig. 1 zeigt eine Bipolarplatte 1 mit einer Seite 1a und einer Seite 1b, und mit Gasdurchführungsbohrungen 2a für das Reduktionsmittel Wasserstoff und Gasdurchführungsbohrungen 2b für das Oxidationsmittel Sauerstoff oder Luft, mit einer Gasverteilungsstruktur, z. B. einer Kanalstruktur 3, und mit einem umlaufendem, nicht strukturierten Dichtrand, dessen Breite zwischen 0,1 mm und 10 mm, bevorzugt zwischen 1 mm und 5 mm, besonders bevorzugt zwischen 2 mm und 3 mm liegt. Zweckmäßigerweise, aber nicht notwendig, liegen die Erhebungen der Kanalstruktur 3 auf derselben Ebene wie der Dichtrand. Stromleitende und gasdurchlässige Gasdiffusionsschichten 4 mit typischer Dicke zwischen 0,1 mm und 0,5 mm sind auf der Bipolarplatte positioniert und mit einer Haltevorrichtung fixiert, und zwar eine anodenseitige Gasdiffusionsschicht 4a des Wasserstoffraums und eine kathodenseitige Gasdiffusionsschicht 4b des Sauerstoffraums (Fig. 4). Besonders vorteilhaft kann deren Positioniewng mit Hilfe von Stiften in den Gasdurchführungen 2a und 2b erfolgen. Die Gasdiffusionsschichten müssen dazu an den den Durchführungen in der Bipolarplatte entsprechenden Stellen Aussparungen aufweisen. Die Gasdiffusionsschicht 4a ist etwas größer als der mit der Kanalstruktur 3 versehene Bereich der Bipolarplatte. Die Überlappung 5 zwischen der Gasdiffusionsschicht 4 und der Kanalstruktur 3 liegt zwischen 0,1 mm und 5 mm, bevorzugt zwischen 0,3 mm und 0,8 mm und verringert die Breite des Dichtrands auf einen Kleberand 3a, der der Randbereich der Bipolarplatte 1 ist, der außerhalb des von der Gasdiffusionsschicht überdeckten Bereichs ist und einen ringförmigen um die Gasdiffusionsschicht liegenden Volumenbereich begrenzt. Die Kanalstruktur 3 mit der Gasdiffusionsschicht 4a bilden einen Wasserstoffraum 6.

Zunächst soll die Abdichtung des Wasserstoffraumes 6 dargestellt werden, die bevorzugt durchgeführt wird. Bei der Herstellung eines gasdichten Verbundes der Bipolarplatte und der Membran-Elektroden-Einheit muß unterschieden werden, ob im Aufbau der PEM-Brennstoffzelle eine komplette MEA verwendet wird, d. h. eine Membran mit zwei Katalysatorschichten und mit mindestens der Anoden-Gasdiffusionsschicht, oder ob es sich um katalysierte Membranen mit aufgelegter Anoden-Gasdiffusionsschicht handelt. Im folgenden wird zunächst die Vorgehensweise bei Auswahl einer katalysierten Membranen mit nur aufgelegter Anoden-Gasdiffusionsschicht beschrieben. Die dabei gemachten Angaben zur Breite des Dichtrandes, zur Dicke der Gasdiffusionsschicht und zur Überlappung zwischen Gasdiffusionsschicht und Bipolarplatte gelten bevorzugt für alle noch darzustellenden Klebeverfahren.

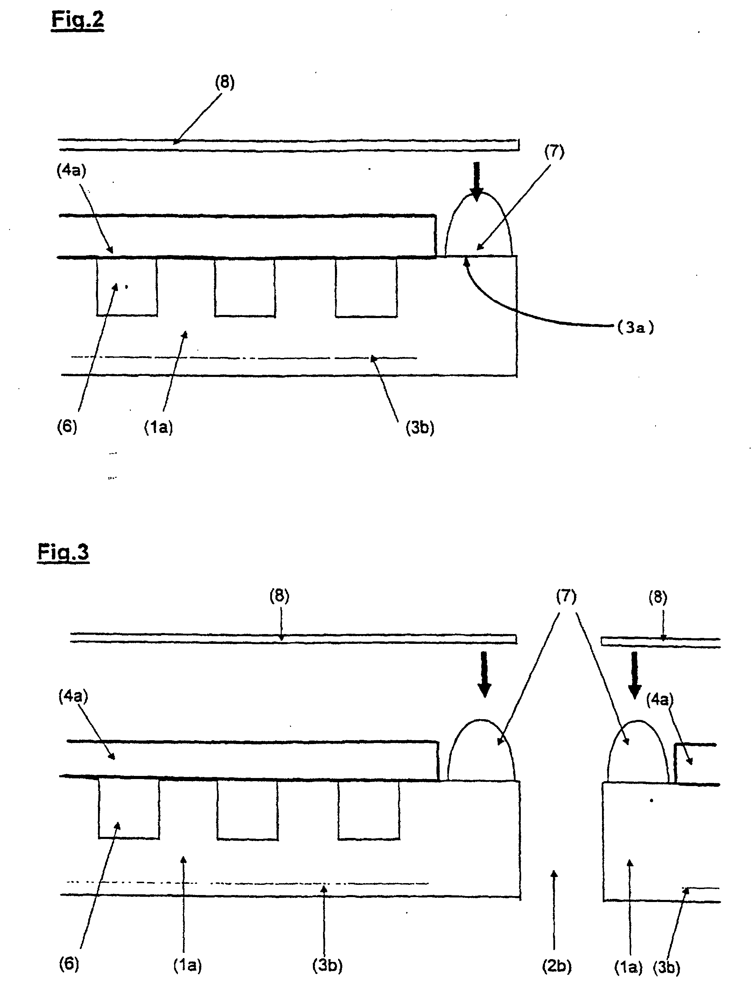

Zur Herstellung des Zellenverbunds wird, nach Auswahl eines geeigneten Klebers zur Abdichtung des Wasserstoffraums 6, wie in Fig. 2 dargestellt eine Kleberaupe 7, die höher ist als die Gasdiffusionsschicht 4a des Wasserstoffraums, auf die Seite 1a der Bipolarplatte aufgetragen, die mit der anodenseitigen Gasdiffusionsschicht 4a in Kontakt steht. Das Volumen des aufgebrachten Klebers wird so bemessen, daß der Spalt zwischen der seitlichen Oberfläche der Gasdiffusionsschicht 4a und dem Dichtrand vollständig gefüllt wird. Die Kleberaupe 7 wird also mit geeigneten Dosiervorrichtungen dergestalt aufgebracht, daß sie die Oberfläche der Gasdiffusionsschicht 4a überragt, und wird am Kleberand so positioniert, daß sie die Gasdiffusionsschicht gerade eben berührt oder knapp vor dieser endet.

Der Verbund umfaßt weiterhin eine katalysierte oder nicht katalysierte Membran 8. Durch Auflegen der z. B. katalysierten Membran 8 wird nun die Kleberaupe 7 so deformiert, daß sie den gesamten Spalt zwischen Bipolarplatte und Membranunterseite füllt und der Kleber zumindest bis an die Stirnflächen der Gasdiffusionsschicht reicht und bevorzugt sogar über Distanzen von < 1 mm in die Gasdiffusionsschicht 4a eindringt. Die so aufgelegte Membran 8 kann zunächst eben auf der Gasdiffusionsschicht 4a liegen oder im Bereich der Kleberaupe 7 auch leicht erhöht sein.

Um die dünne, katalysierte Membran auf die Bipolarplatte mit Gasdiffusionsschicht und Kleberaupe eben aufzulegen, bedient man sich zweckmäßigerweise einer Hilfskonstruktion, nämlich eines beweglichen Vakuumspanntisches. Dieser kann ähnlich einer Bipolarplatte aus einem Kanalsystem bestehen, das durch ein poröses Kohlfaserpapier abgedeckt ist. Durch Erzeugung eines Unterdrucks in diesem Kanalsystem kann eine Membran eben aufgespannt und zusammen mit dem Vakuumspanntisch auf die Bipolarplatte mit Gasdiffusionsschicht und Kleberaupe aufgesetzt werden. Bevorzugt enthält auch die Membran und evtl. der Vakuumspanntisch an denselben Positionen wie die Bipolarplatte Bohrungen, die später zur Gasdurchführung durch die einzelnen Zellen eines Stacks dienen.

Anschließend muß der Kleber je nach Art seiner Zusammensetzung unter den entsprechenden Bedingungen, beispielsweise bei leichter Temperaturerhöhung oder bei Raumtemperatur, ausgehärtet werden.

Nun ist es möglich, den so hergestellten Verbund aus Bipolarplatte und Membran auf seine Dichtigkeit zu prüfen und bei Bedarf auch eine Funktionsprüfung dieser einzelnen Brennstoffzelle vorzunehmen. Die Funktionsprüfung kann dadurch erfolgen, daß der Verbund mit einer geeigneten Luftführungsstruktur aus Graphit zusammengespannt wird und die somit vollständige Einzelzelle zumindest mit Luft nahe dem Umgebungsdruck betrieben werden kann.

Falls eine Membran, auf der die Gasdiffusionsschichten haften, verwendet werden soll, existiert ebenfalls eine Möglichkeit der Abdichtung des Wasserstoffgasraums zwischen Bipolarplatte und MEA. Die MEA muß dazu einen freien, d. h. nicht von der Gasdiffusionsschicht bedeckten Rand aufweisen. Die Kleberaupe wird dann eventuell nicht auf die Bipolarplatte, sondern bevorzugt direkt auf die MEA, die vorteilhaft auf einem geeigneten Vakuumspanntisch aufgespannt ist, aufgetragen. Die so vorbereitete MEA kann dann Zusammen mit dem Vakuumspanntisch auf die Bipolarplatte aufgesetzt werden.

Wie in Fig. 3 dargestellt ist, können auch die Gasdurchführungen wie hier die Gasdurchführung 2b für das Oxidationsmittel Sauerstoff oder Luft durch den Teil der Bipolarplatte 1, dessen Seite 1a mit der Anode in Kontakt steht, in der für die beiden Arten von MEA bereits beschriebenen Weise gegen den Wasserstoffraum 6 gedichtet werden.

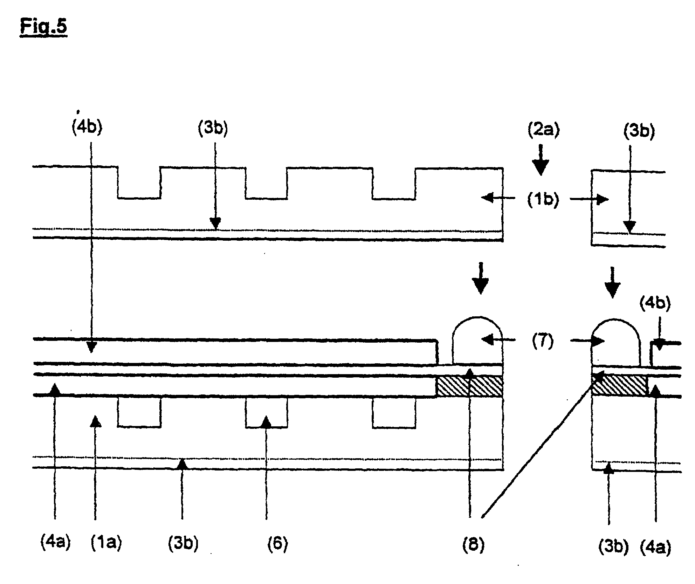

Um aus mehreren erfindungsgemäßen Einheiten aus Bipolarplatte und MEA einen Brennstoffzellenstack herzustellen, der auch mit Sauerstoff oder Luft unter Überdruck betrieben werden kann, können diese Einheiten miteinander luft- und wasserstoffdicht analog dem obigen Verfahren folgendermaßen (vgl. Fig. 4 und Fig. 5) verklebt werden:

Zunächst wird ein Verbund aus Bipolarplatte und MEA einschließlich kathodenseitiger Gasdiffusionsschicht 4b, die am Rand und um die Wasserstoffdurchführung etwas Membranfläche für eine Kleberaupe freiläßt, bereitgestellt. Die Kleberaupe 7 wird in der oben beschriebenen Weise am Umfang der Membran 8 (Fig. 4) und um die Wasserstoffdurchführungen 2a (Fig. 5) aufgebracht. Eine weitere Einheit aus Bipolarplatte und MEA wird mit dem Teil der Bipolarplatte 1, dessen Seite 1b mit der Kathoden in Kontakt steht, auf die Kleberaupe 7 aufgesetzt. Der Kleber wird anschließend unter geeigneten Bedingungen ausgehärtet. Die Kleberaupe 7 am Umfang der Membran 8 dichtet die evtl. unter Überdruck stehende Luft gegen den Außenraum ab, während die Kleberaupe 7 um die Wasserstoffdurchführung 2a verhindert, daß Wasserstoff in den Kathodenraum eindringt.

Bei Betrieb mit Luft nahe dem Umgebungsdruck kann auf die in Fig. 4 dargestellte Abdichtung am äußeren Umfang des Luftraumes verzichtet werden.

Falls Durchführungsbohrungen für Kühlmedien oder Spannelemente vorgesehen sind, können diese gegen Anoden- und Kathodenraum nach Maßgabe von Fig. 3 und zugleich Fig. 5 abgedichtet werden.

Der gasdichte Verbund aus Membran-Elektroden-Baugruppe und Bipolarplatte kann also durch ein technisch unkompliziertes Klebeverfahren erstellt werden, wobei als Klebemittel ein oder mehrere aushärtbare Polymere (Klebstoffe) verwendet werden. Um auf einfache Weise einen gasdichten Verbund aus Bipolarplatte und Membran herstellen zu können, muß das Klebemittel auf der Bipolarplatte und auf der Membran, die evtl. mit einem Katalysator versehen ist, haften. Die Wirksamkeit der Edelmetallkatalysatoren und die Leitfähigkeit der Membran darf weder während des Aushärtungsvorgangs noch im ausgehärtetem Zustand durch flüchtige Stoffe beeinträchtig werden.

Es existieren handelsübliche Klebstoffe, die diese Anforderungen erfüllen. Bei Verwendung von Metallbipolarplatten eignen sich bevorzugt Silikone als dichtendes Klebemittel. Sie haften gut auf nahezu allen Metallen und auf den gängigen perfluorierten oder nichtfluorierten, evtl. auch mit Katalysator versehenen Membrantypen. Werden Graphitbipolarplatten oder Composits aus Graphit und Polymeren eingesetzt, so kann entweder Epoxidharz mittlerer Viskosität oder wiederum Silikon als Klebedichtung verwendet werden. Im letzteren Fall ist allerdings auf der Bipolarplatte eine Haftvermittlungsschicht aus einem dünnen Epoxidharzfilm auf der möglichst aufgerauhten Oberfläche der Bipolarplatte anzubringen. Dieser Epoxidharzfilm kann mittels Siebdruck, Sprühverfahren oder Pinseln aufgebracht werden. Ist ein besonders dünner Film erwünscht, so kann z. B. das zweikomponentige Epoxidharzprodukt Körapox 439 (Kömmerling GmbH) zuvor mit niederen Alkoholen z. B. Ethanol verdünnt werden.

Für alle Arten von Bipolarplatten eignen sich zur Verklebung besonders die Produkte Elastosil E 41 und E 43 (Wacker Chemie AG). Aufgrund von massiven Vergiftungserscheinungen an den aktiven Zentren von Katalysator und Membran ist das zweikomponentige Epoxidharz Stykast W19 (Grace N.V., Belgien) nicht geeignet. Die Viskosität des Klebers liegt zwischen 10.000 mPas und 500.000 mPas, bevorzugt zwischen 60.000 mPas und 350.000 mPas. Eine leicht thixotrope Konsistenz kann von Vorteil sein.

Die Vorteile des erfindungsgemäßen Klebeverfahrens liegen in der Vermeidung von Spalten zwischen Dichtung und Gasdiffusionsschichten. Weiterhin bedarf es keines großen Anpreßdrucks, da dieser durch die Adhäsionskräfte der Klebung ersetzt wird. Weder Dichtung noch Elektroden müssen mit geringen Maßtoleranzen gefertigt, auch der Querschnitt der Gaszuführungen kann beliebig gewählt werden. Dichtetests und zumindest Funktionstest mit Luft unter Umgebungsdruck sind für die Einzelzellen möglich. Es entsteht nahezu kein zusätzliches Gewicht durch die Klebedichtung. Eine kostengünstige, industrielle Fertigung ist somit möglich.

### BEZUGSZEICHENLISTE

- (1): Bipolarplatte
- (1a): Seite der Bipolarplatte, die mit der Anode in Berührung steht
- (1b): Seite der Bipolarplatte, die mit der Kathode in Berührung steht
- (2): Gasdurchführungsbohrungen
- (2a): Gasdurchführung für das Reduktionsmittel Wasserstoff
- (2b): Gasdurchführung für das Oxidationsmittel Sauerstoff oder Luft
- (3): Gasverteilungsstruktur z. B. Kanalstruktur
- (3a): Kleberand
- (3b): Gasverteilungsstruktur für Sauerstoff
- (4): Gasdiffusionsschicht
- (4a): Gasdiffusionsschicht des Wasserstoffraums
- (4b): Gasdiffusionsschicht des Sauerstoffraums
- (5): Überlappung zwischen Gasdiffusionsschicht und Bipolarplatte
- (6): Wasserstoffraum
- (7): Kleberaupe
- (8): Membran

## Patentansprüche

1. Verbund aus einer Membran-Elektroden-Baugruppe "MEA" (8, 4a, 4b) und einer Bipolarplatte (1) einer Brennstoffzelle als Bauelement eines Brennstoffzellenstapels, wobei die MEA eine Polymerelektrolytmembran (8) und auf dieser mit Ausnahme des Membranrands im Verbund aufliegend eine Gasdiffusionsschicht (4a, 4b) umfaßt, an deren der Membran gegenüberliegenden Seite die Bipolarplatte (1) anliegt, die unter Bildung eines umlaufenden, ober-, innenund unterseitig durch die Bipolarplatte (1), die Gasdiffusionsschicht (4a, 4b) und die Membran (8) begrenzten randseitigen Volumenbereichs über den Rand der Gasdiffusionsschicht übersteht, **dadurch gekennzeichnet, daß** der umlaufende Volumenbereich bis zu seinen Begrenzungsflächen spaltfrei und gasdicht mit einem verfestigten Klebemittel (7) ausgefüllt ist.

2. Verbund aus Bipolarplatte und MEA nach Anspruch 1, **dadurch gekennzeichnet, daß** die Wasserstoffseite der Bipolarplatte (1) mit der Anodenseite der MEA (8, 4a, 4b) verklebt ist.

3. Verbund aus Bipolarptatte und MEA nach Anspruch 1 oder 2, **dadurch gekennzeichnet, daß** das Klebemittel (7) 0,2 mm bis 1 mm in die Gasdiffusionsschicht (4a) eingedrungen ist.

4. Verbund aus Bipolarplatte und MEA nach einem der Ansprüche 1 bis 3, **dadurch gekennzeichnet, daß** das verfestigte klebemittel (7) ein ausgehärtetes Silikon oder ein Epoxidharz ist.

5. Verbund aus Bipolarplatte und MEA nach einem der Ansprüche 1 bis 4, **dadurch gekennzeichnet, daß** die Bipolarplatte (1) und/oder die Membran (8) im Bereich des Klebemittels mit einem Haftvermittler vorbehandelt ist.

6. Verbund aus Bipolarplatte und MEA nach einem der Ansprüche 1 bis 5, **dadurch gekennzeichnet, daß** der mit dem verfestigten Klebemittel (7) verbundene Randbereich der Bipolarplatte (1) und die Oberfläche von deren Gasverteilungsstruktur (3) in einer Ebene liegen.

7. Verbund aus Bipolarplatte und MEA nach einem der Ansprüche 1 bis 6, **dadurch gekennzeichnet, daß** im Bereich von Anoden- und/oder Kathodengasdurchführungen auch ober-, außen- und unterseitig durch die Bipolarplatte (1), die Gasdiffusionsschicht (4a, 4b) und die Membran (8) begrenzte Volumenbereiche, die die Gasdurchführungen (2a, 2b) umgeben, spaltfrei und gasdicht mit verfestigtem Klebemittel ausgefüllt sind.

8. Verfahren zur Herstellung eines gasdichten Verbundes aus wenigstens einer Bipolarplatte und wenigstens einer Membran-Elektroden-Baugruppe "MEA" nach einem der Ansprüche 1 bis 7, **dadurch gekennzeichnet, daß** man zur dichten Ausfüllung eines umlaufenden, ober-, innen- und unterseitig durch die Bipolarplatte (1), eine Gasdiffusionsschicht (4a, 4b) und die Membran (8) begrenzten randseitigen Volumenbereichs zunächst auf den Rand der Membran oder der Bipolarplatte fließfähiges Klebemittel in Form einer Dichtraupe aufträgt, die höher ist als die Gasdiffusionsschicht und deren Volumen man so bemißt, daß sie den genannten Volumenbereich vollständig füllt, und man das Klebemittel dann durch Zusammenfügen des Verbunds aus der Membran, der Gasdiffusionsschicht und der Bipolarplatte in die Form des Volumenbereichs bringt und so aushärten läßt.

9. Verfahren nach Anspruch 8 für eine Reaktion zwischen Wasserstoff und Sauerstoff, **dadurch gekennzeichnet, daß** man die Wasserstoffseite der Bipolarplatte bzw. der MEA verklebt, indem man das Klebemittel auf die Wasserstoffseite der Bipolarplatte bzw. der MEA aufträgt.

10. Verfahren nach Anspruch 8 oder 9, **dadurch gekennzeichnet, daß** man das Klebemittel vor dem Verfestigen 0,2 mm bis 1 mm in die Gasdiffusionsschicht eindringen läßt.

11. Verfahren nach einem der Ansprüche 8 bis 10, **dadurch gekennzeichnet, daß** man die Klebung mit einem aushärtbaren Silikon oder einem Epoxidharz durchführt.

12. Verfahren nach einem der Ansprüche 8 bis 11, **dadurch gekennzeichnet, daß** man die Bipolarplatte und/oder die Membran im Bereich des Klebemittels mit einem Haftvermittler vorbehandelt.

13. Verfahren nach einem der Ansprüche 8 bis 12, **dadurch gekennzeichnet, daß** man zur Positionierung der MEA mit oder ohne Gasdiffusionsschichten auf der Bipolarplatte ein Vakuumspanntisch verwendet.

14. Verfahren zur Herstellung eines gasdichten Verbundes nach Anspruch 7, der Anoden- und/oder Kathodengasdurchführungen umfaßt, nach einem der Ansprüche 8 bis 13, **dadurch gekennzeichnet, daß** man mindestens eine der Gasdurchführungen (2a, 2b), welche das Gas führt, das nicht in den Gasraum des Verbundes eindringen soll, durch Klebung mit dem Klebemittel analog dem randseitigen Volumenbereich abdichtet.

15. Anwendung des Verbundes aus Bipolarplatte und MEA nach einem der Ansprüche 1 bis 7 in Brennstoffzellenstacks und/oder Stacks aus Elektrolysezellen, indem mehrere Verbunde aus Bipolarplatte und MEA nach einem der Ansprüche 1 bis 7 durch Stapelung elektrisch in Serie geschaltet sind.

## Claims

1. Assembly composed of a membrane-electrode unit "MEA" (8, 4a, 4b) and a bipolar plate (1) of a fuel cell as component of a fuel cell stack, wherein the MEA comprises a polymer electrolyte membrane (8) and a gas diffusion layer (4a, 4b) resting in the assembly on the membrane with the exception of the membrane periphery, with the bipolar plate (1) resting against the side of the gas diffusion layer opposite the membrane and protruding over the periphery of the gas diffusion layer while forming a circumferential marginal volume zone that is defined at the top, inner and bottom sides by the bipolar plate (1), the gas diffusion layer (4a, 4b) and the membrane (8), **characterized in that** the circumferential volume zone is filled with a cured adhesive (7) all the way to its defining faces in a gap-free and gas-tight manner.

2. Assembly composed of a bipolar plate and an MEA in accordance with Claim 1, **characterized in that** the hydrogen side of the bipolar plate (1) is glued together with the anode side of the MEA (8, 4a, 4b).

3. Assembly composed of a bipolar plate and an MEA in accordance with Claim 1 or 2, **characterized in that** the adhesive (7) penetrates into the gas diffusion layer (4a) 0.2 mm to 1 mm.

4. Assembly composed of a bipolar plate and an MEA in accordance with any of Claims 1 to 3, **characterized in that** the hardened adhesive (7) is a cured silicone or an epoxy resin.

5. Assembly composed of a bipolar plate and an MEA in accordance with any of Claims 1 to 4, **characterized in that** the bipolar plate (1) and/or the membrane (8) has been pretreated with a bonding agent in the area of the adhesive.

6. Assembly composed of a bipolar plate and an MEA in accordance with any of Claims 1 to 5, **characterized in that** the peripheral zone of the bipolar plate (1), which has been bonded with the cured adhesive (7), and the surface of its gas distribution structure (3) are located flush in one plane.

7. Assembly composed of a bipolar plate and an MEA in accordance with any of Claims 1 to 6, **characterized in that** in the area of anode and/or cathode gas conducts, also such volume zones which are defined at the top, exterior and bottom sides by the bipolar plate (1), the gas diffusion layer (4a, 4b) and the membrane (8) and which surround the gas conducts (2a, 2b), are filled with a cured adhesive in a gap-free and gas-tight manner.

8. Method for producing a gas-tight assembly composed of at least one bipolar plate and at least one membrane electrode unit "MEA" in accordance with any of claims 1 to 7, **characterized in that** for filling a circumferential marginal volume zone that is defined at the top, inner and bottom sides by the bipolar plate (1), a gas diffusion layer (4a, 4b) and the membrane (8) in a sealing manner, a free-flowing adhesive is initially applied to the margin of the membrane or the bipolar plate in the form of an adhesive bead that is higher than the gas diffusion layer and whose volume is dimensioned so as to completely fill the mentioned volume zone, and that the adhesive is then brought into the shape of the volume zone by assembling the assembly composed of the membrane, the gas diffusion layer and the bipolar plate and is permitted to cure.

9. Method in accordance with Claim 8 for a reaction between hydrogen and oxygen, **characterized in that** the hydrogen side of the bipolar plate or of the MEA is glued by applying the adhesive to the hydrogen side of the bipolar plate or of MEA.

10. Method in accordance with Claim 8 or 9, **characterized in that** the adhesive is allowed to penetrate into the gas diffusion layer by 0.2 mm to 1 mm before curing.

11. Method in accordance with any of Claims 8 to 10, **characterized in** the gluing process is performed with a curable silicone or an epoxy resin.

12. Method in accordance with any of Claims 8 to 11, **characterized in that** the bipolar plate and/or the membrane are pretreated with a bonding agent in the area of the adhesive.

13. Method in accordance with any of Claims 8 to 12, **characterized in that** a vacuum clamping table is utilized for positioning the MEA with or without gas diffusion layers on the bipolar plate.

14. Method according to any of claims 8 to 13 for producing a gas-proof assembly according to Claim 7 which assembly comprises anode and/or cathode gas conducts, **characterized by** the fact that at least one of the gas conducts (2a, 2b) conveying the gas which is not to penetrate into the gas chamber of the assembly, is sealed by a gluing process with the adhesive as described for the marginal volume zone.

15. Application of the assembly composed of a bipolar plate and an MEA in accordance with any of Claims 1 to 7 in fuel cell stacks and/or stacks of piles of electrolysis cells where several assemblies composed of a bipolar plate and an MEA as defined in any of claims 1 to 7 are connected electrically in series by stacking.

## Revendications

1. Jonction formée d'un groupe membrane-électrode "MEA" (8, 4a, 4b) et d'une plaque bipolaire (1) d'une pile à combustible comme composant d'un empilage de piles à combustible, le groupe MEA ayant une membrane de polymère électrolyte (8) et sur celle-ci, à l'exception du bord de la membrane, une couche de diffusion de gaz (4a, 4b), avec la plaque bipolaire (1) appliquée contre le côté de cette couche à l'opposé de la membrane, cette plaque dépassant du bord de la couche de diffusion de gaz en formant une zone de volume périphérique délimitée du côté supérieur, du côté inférieur et du côté intérieur par la plaque bipolaire (1), par la couche de diffusion de gaz (4a, 4b) et par la membrane (8), **caractérisée en ce que** la zone de volume périphérique est remplie sans laisser d'intervalle jusqu'à sa surface limite et de manière étanche au gaz par un agent adhésif (7) solidifié.

2. Jonction formée d'une plaque bipolaire et d'un groupe MEA selon la revendication 1, **caractérisée en ce que** le côté hydrogène de la plaque bipolaire (1) est collé à la face anodique du groupe MEA (8, 4a, 4b).

3. Jonction formée d'une plaque bipolaire et d'un groupe MEA selon l'une des revendications 1 ou 2, **caractérisée en ce que** l'agent adhésif (7) pénètre sur une profondeur de 0,2 mm à 1 mm dans la couche de diffusion de gaz (4a).

4. Jonction formée d'une plaque bipolaire et d'un groupe MEA selon l'une des revendications 1 à 3, **caractérisée en ce que** l'agent adhésif (7), solidifié, est du silicone solidifié ou de la résine époxyde.

5. Jonction formée d'une plaque bipolaire et d'un groupe MEA selon l'une des revendications 1 à 4, **caractérisée en ce que** la plaque bipolaire (1) et/ou la membrane (8) est traitée dans la zone de collage, de manière préparatoire avec un agent favorisant l'accrochage.

6. Jonction formée d'une plaque bipolaire et d'un groupe MEA selon l'une des revendications 1 à 5, **caractérisée en ce que** la zone de bord de la plaque bipolaire (1) reliée par l'agent adhésif solidifié (7) et la surface supérieure de sa structure de distribution de gaz (3) se situent dans un plan.

7. Jonction formée d'une plaque bipolaire et d'un groupe MEA selon l'une des revendications 1 à 6, **caractérisée en ce qu'**au niveau des passages de gaz de l'anode et/ou de la cathode aussi les zones de volume qui sont limitées du côté supérieur, du côté extérieur et du côté inférieur par la plaque bipolaire (1), par la couche de diffusion de gaz (4a, 4b) et par la membrane (8), et qui entourent les passages de gaz (2a, 2b) sont remplies sans intervalle et de manière étanche au gaz par l'agent adhésif solidifié.

8. Procédé de fabrication d'une jonction étanche au gaz formée d'au moins une plaque bipolaire et d'au moins un groupe membrane-électrodes "MEA" selon l'une des revendications 1 à 7, **caractérisé en ce que** pour remplir de manière étanche une zone de volume périphérique située du côté du bord et délimitée du côté supérieur, du côté intérieur et du côté inférieur par la plaque bipolaire (1), par une couche de diffusion de gaz (4a, 4b) et par la membrane (8), tout d'abord le bord de la membrane ou de la plaque bipolaire reçoit un agent adhésif fluide sous la forme d'un cordon d'étanchéité plus haut que la couche de diffusion de gaz et dont le volume est dosé pour remplir complètement la zone de volume ci-dessus, et on met l'agent adhésif par assemblage de la jonction de la membrane, de la couche de diffusion et de la plaque bipolaire dans la forme de la zone de volume et on le laisse durcir.

9. Procédé selon la revendication 8 pour une réaction entre l'hydrogène et l'oxygène, **caractérisé en ce qu'**on colle le côté hydrogène de la plaque bipolaire ou du groupe MEA en appliquant l'agent adhésif sur le côté hydrogène de la plaque bipolaire ou du groupe MEA.

10. Procédé selon les revendications 8 ou 9, **caractérisé en ce qu'**on laisse pénétrer l'agent adhésif dans la couche de diffusion de gaz sur une profondeur de 0,2 mm à 1 mm avant la solidification.

11. Procédé selon l'une des revendications 8 à 10, **caractérisé en ce qu'**on effectue le collage avec du silicone durcissable ou avec une résine époxyde.

12. Procédé selon l'une des revendications 8 à 11, **caractérisé en ce qu'**on effectue un traitement préalable de la plaque bipolaire et/ou de la membrane au niveau de la zone de collage avec un agent adhésif favorisant l'accrochage.

13. Procédé selon l'une des revendications 8 à 12, **caractérisé en ce qu'**on utilise un plateau de mise en tension sous vide pour positionner le groupe MEA avec ou sans couches de diffusion de gaz sur la plaque bipolaire.

14. Procédé de fabrication d'une jonction étanche au gaz selon la revendication 7, comprenant des passages de gaz pour l'anode et/ou la cathode, selon l'une des revendications 8 à 13, **caractérisé en ce qu'**au moins de l'un des passages de gaz (2a, 2b) conduisant le gaz qui ne doit pas pénétrer dans le volume de gaz de la jonction, est rendu étanche par un collage avec l'agent adhésif analogue à la zone de volume du côté du bord.

15. Application de la jonction formée de la plaque bipolaire et du groupe MEA selon l'une des revendications 1 à 7 dans des empilages de piles à combustible et/ou des empilages de cellules d'électrolyse en branchant plusieurs jonctions d'une plaque bipolaire et d'un groupe MEA selon l'une des revendications 1 à 7 par empilage électrique selon un montage en série.
